# EUROPEAN PATENT APPLICATION

(11) **EP 3 127 651 A1**
(43) Date of publication of application: **08.02.2017**
(21) Application number: 15179559.8
(22) Date of filing: 03.08.2015
(51) Int. Cl.: B23K 28/02, B23K 31/02, C09J 5/00, C09J 5/10

(54) **METHOD FOR WELDING METAL COMPONENTS WITH LOCAL WELDING AND PASTE BONDING**

(71) Applicant: Keysheen Industry (Shanghai) Co., Ltd., Qingpu Industry Zone Shanghai 201703 (CN)
(72) Inventor: LIU, Shopo Hsin Tsu, 201703 Shanghai (CN); LIU, Fibro Tsu Kun, 201703 Shanghai (CN); LIU, Iko, Xindian Dist., New Taipei City (TW)
(74) Representative: 2K Patentanwälte Blasberg Kewitz & Reichel

(57) **Abstract**

A method for welding metal components to weld a first metal piece (20) and a second metal piece (21) to form a metal component (24) comprises the steps of: positioning a first working portion of the first metal piece (20) against a second working portion of the second metal piece (21) to jointly form an intended welding seam, performing local welding on the intended welding seam to form a plurality of welding zones (221) and a plurality of non-welding zones that are spaced from each other, providing a bonding paste (23) to fill the non-welding zones and providing a curing condition to cure the bonding paste (23) to mask the non-welding zonesto finish welding of the first metal piece (20) and the second metal piece (21) to form the metal component (24).

## Description

### FIELD OF THE INVENTION

The present invention relates to a method for welding metal components and particularly to a welding method incorporating with a paste filling process.

### BACKGROUND OF THE INVENTION

Welding is a widely adopted technique that usually aims to join at least two metal pieces intended for assembly by welding to form a complete weld at the junction of the two metal pieces to produce improved structural strength after the welding is finished.

However, during the welding process of the metal pieces a molten crater is formed on the surfaces thereof and a solder is added to aid welding. As a result, after the welding is finished the weld is jutting noticeably from the metal surfaces that makes the metal surfaces no longer neat or smooth. Hence an additional grinding process usually is needed to trim the metal surfaces that result in higher fabrication cost. There is still room for improvement.

### SUMMARY OF THE INVENTION

The primary object of the present invention is to solve the problems of the conventional technique of higher cost and requiring extra grinding.

To achieve the foregoing object the present invention provides a method for welding metal components that comprises the following steps:
Material preparing step: Provide a first metal piece and a second metal piece. The first metal piece has a first working portion intended to join the second metal piece, and the second metal piece has a second working portion intended to join the first metal piece;
Welding preparing step: Position the second working portion of the second metal piece against the first working portion of the first metal piece to jointly define an intended welding seam;
Local welding step: Perform local welding on the intended welding seam to form a plurality of welding zones and a plurality of non-welding zones thereon that are spaced from each other; and
Local paste filling step: Fill a bonding paste to each non-welding zone and cure the bonding paste in a curing condition to mask the non-welding zone to finish welding of the first metal piece and the second metal piece to form a metal component.

In one embodiment the curing condition at the local paste filling step is a drying time after elapse thereof the bonding paste is cured on the welded first metal piece and the second metal piece.

In another embodiment the curing condition at the local paste filling step is a curing temperature to cure the bonding paste on the welded first metal piece and the second metal piece.

In yet another embodiment the bonding paste at the local paste filling step is an ultraviolet ray curing paste and the curing condition is providing an ultraviolet ray to project on the bonding paste to generate curing thereof on the welded first metal piece and the second metal piece.

In yet another embodiment the local paste filling step further is followed by a grinding step to grind the welding zone so that the surface of the intended welding seam is neat and smooth to match the surface of the first metal piece or the second metal.

In yet another embodiment the grinding step further includes a sub-step of grinding the non-welding zones at the same time after paste filling.

In yet another embodiment the grinding step is followed by a trimming step to make coloration on the total surface of the metal component to change surface characteristics of the metal component.

In yet another embodiment the welding zones at the local welding step has a total length greater than at least 30% of the total length of the intended welding seam.

Through the method set forth above, compared with the conventional technique, the invention can provide many advantageous features, notably:
1. In a condition of producing a same structural strength the invention provides local welding on the first metal piece and the second welding piece intended for welding, and can form a weld shorter than that of the conventional technique after the welding is finished, thus can reduce grinding portion, consequently make welding cost lower.
2. By filling the bonding paste in the non-welding zones to mask the intended welding seam and form a smoother surface after curing, grinding potion required at the downstream process can be reduced.

The foregoing, as well as additional objects, features and advantages of the invention will be more readily apparent from the following detailed description, which proceeds with reference to the accompanying drawings.

### BRIEF DESCRIPTION OF THE DRAWINGS

FIG. 1 is a flowchart of a first embodiment of the invention.
FIGS. 2A through 2D are implementation schematic views of the first embodiment of the invention.
FIGS. 3A through 3D are implementation schematic views of a second embodiment of the invention.
FIG. 4 is a flowchart of a third embodiment of the invention.
FIG. 5 is a flowchart of a fourth embodiment of the invention.

### DETAILED DESCRIPTION OF THE PREFERRED EMBODIMENTS

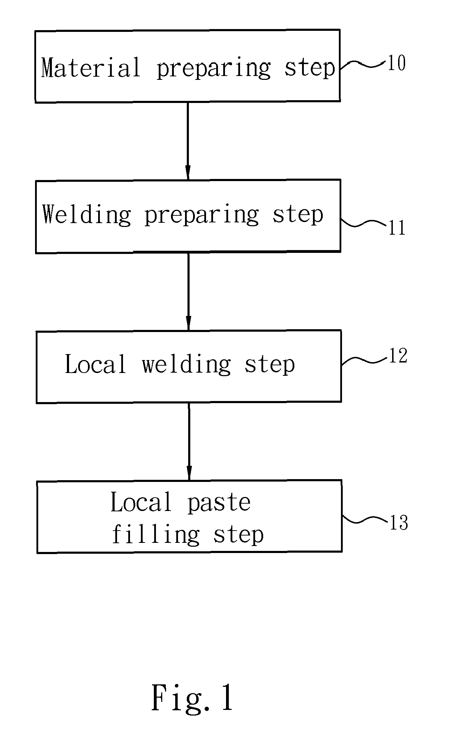

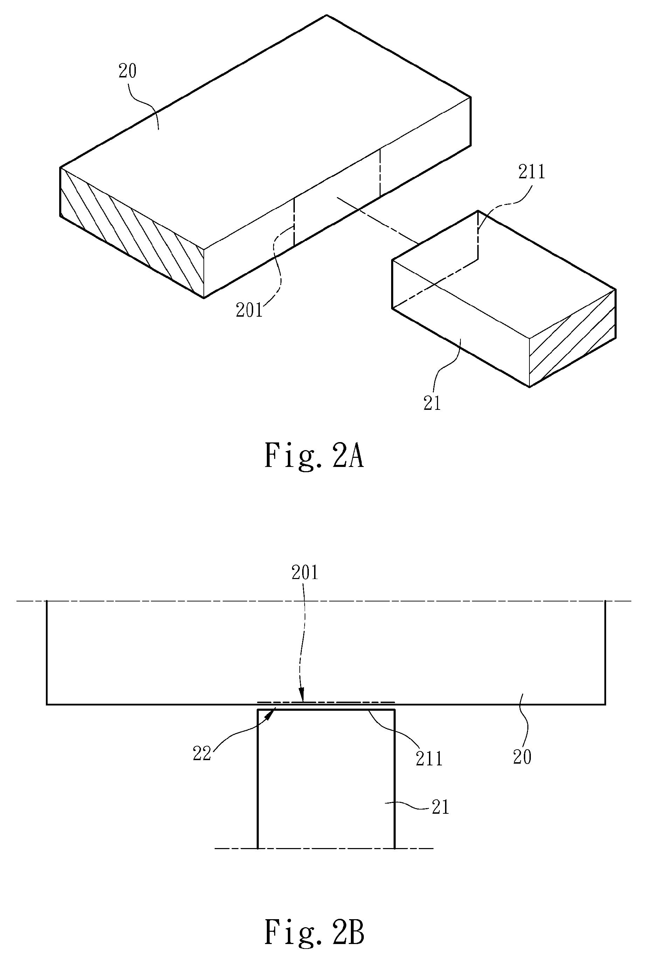

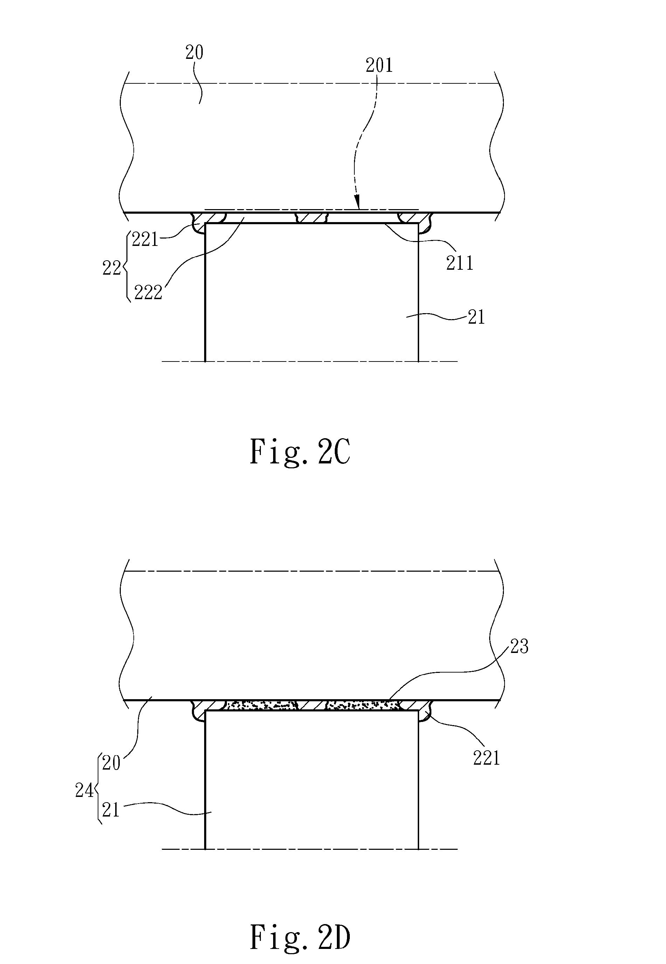

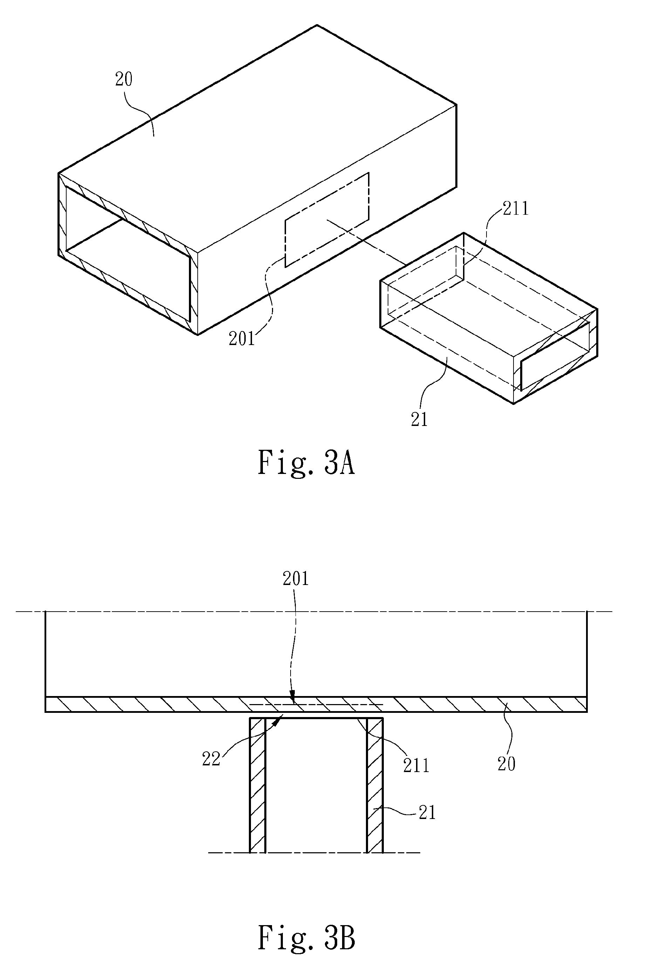

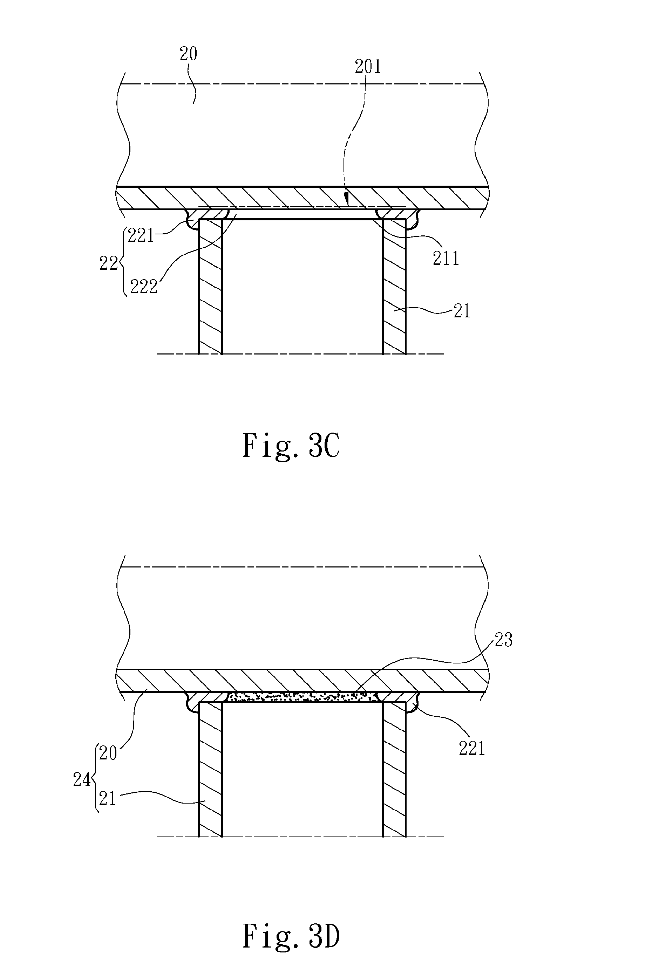

The present method aims to provide a method for welding metal components to weld a plurality of metal pieces to form a metal component. Please referring to FIG. 1, the method comprises the following steps: material preparing step 10, welding preparing step 11, local welding step 12 and local paste filling step 13. More specifically, also referring to FIGS. 2 and 3, at the material preparing step 10, provide a first metal piece 20 and a second metal piece 21. The first metal piece 20 and the second metal piece 21 can be respectively a metal tube or a metal plate. To facilitate discussion, metal plates are adopted in the embodiments of the first metal piece 20 and the second metal piece 21 herein. According to assembly requirement the first metal piece 20 has a first working portion 201 intended to join the second metal piece 21, and the second metal piece 21 has a second working portion 211 intended to join the first metal piece 20, as shown in FIG. 2A.

Next, the welding preparing step 11, please referring to FIG. 2B, prepare to make preassembly of the first metal piece 20 and the second metal piece 21 by positioning the second working portion 211 of the second metal piece 21 against the first working portion 201 of the first metal piece 20 to jointly define an intended welding seam 22. Next, enter the local welding step 12: perform local welding on the intended welding seam 22 to form a plurality of welding zones 221 and a plurality of non-welding zones 222 that are spaced from each other. Furthermore, the welding technique employed in the invention can be, but not limited to, arc welding, gas welding, resistance welding, brazing or soldering. At the local welding step 12, preset a welding start spot and perform welding for a selected distance to form one welding zone 221, then stop welding on the intended welding seam 22 for another selected distance to form one non-welding zone 222; next, perform another welding on the intended welding seam 22 to form another welding zone 221; such a process cycle is repeated as shown in FIG. 2C so that a weld is formed in an intermittent manner on the intended welding seam 22 rather than a continuous fashion. Moreover, in one embodiment total length of the welding zones 221 is at least 30% of the total length of the intended welding seam 22. However, the total length ratio of the welding zone 221 against the total length of the intended welding seam 22 can be adjusted according to desired structural length to be made for the metal component.

Please referring to FIG. 2D, after the local welding step 12 is finished, enter the local paste filling step 13: fill a bonding paste 23 to each non-welding zone 222 and cure the bonding paste 23 in a curing condition to mask the non-welding zone 222 to finish welding of the first metal piece 20 and the second metal piece 21 to form a metal component 24 as shown in FIG. 2D. In addition, the bonding paste 23 can be selected according to actual requirement or work environment in the fabrication and assembly processes. For instance, the bonding paste 23 can be a solvent-based bonding paste, an emulsified polymer bonding paste, a heated bonding paste or ultraviolet ray curing paste. In one embodiment the curing condition is a drying time. After the bonding paste is filled at the local paste filling step 13 and the first metal piece 20 and the second metal piece 21 are maintained for a duration of the drying time the bonding paste 23 is cured. The drying time can vary by selecting different types or different blending proportions of the bonding paste. In another embodiment the curing condition is a curing temperature. After the bonding paste is filled at the local paste filling step 13, place the metal component 24 in a heated baking equipment, or provide hot air to the metal component 24 via a portable hot air equipment to provide the curing temperature to the intended welding seam 22 formed on the first metal piece 20 and the second metal piece 21 to cure the bonding paste 23. In yet another embodiment curing of the bonding paste 23 is accomplished through an ultraviolet ray curing paste, and the curing condition is projecting an ultraviolet ray to the bonding paste 23 on the metal component 24 to form curing thereof. Furthermore, after the ultraviolet ray curing paste is cured it is unlikely to be changed by other ordinary physical conditions (such as temperature). The cured ultraviolet ray curing paste can be changed and removed only by using a release solvent. Thus when the ultraviolet ray curing paste is selected change of the metal component 24 in the downstream fabrication process due to work environmental factors (such as temperature) can be prevented.

As previously discussed, the metal component 24 finished via the welding method of the invention has only the welding zones 221 formed by local welding while the remained portions are the masked non-welding zones 222 formed by filling the bonding paste 23, hence the portion of the intended welding seam 22 that require downstream fabrication (such as grinding) is smaller, and the solder needed during the welding process also can be reduced..

Please referring to FIGS. 1, and 3A through 3D, the method of the invention, in addition to be used on welding the metal plates, also can be used on welding metal tubes as shown in the drawings. At the material preparing step 10 the first metal piece 20 and the second metal piece 21 of metal tubes are provided that have respectively the intended first working portion 201 and the second working portion 211. At the welding preparing step 11 the first metal piece 20 and the second metal piece 21 are preassembled to jointly define an intended welding seam 22 via the first working portion 201 and the second working portion 211. Then enter the local welding step 12 to do welding as previously discussed or on at least two opposite lateral sides of the second metal piece 21 with the finished weld fully covered one lateral side of the second metal piece 21 to form the welding zone 221 as shown in FIG. 3C, while the remained lateral sides formed the non-welding zone 222; then enter the local paste filling step 13 to fill the bonding paste 23 in the non-welding zone 222 at the lateral side of the second metal piece 21; finally perform curing on the bonding paste 23 in the curing condition to finish welding to form the metal component 24.

The invention also makes test comparisons of the structural strength between the metal component 24 made via the method of the invention and the conventional welding technique. Test outcomes show that the structural strength of the metal component 24 made via the method of the invention is proximate that of the conventional metal structure without seriously damaging the structural strength, hence prove the method of the invention can produce same degree of structural strength and reduce welding portion and the consumed solder material and cost.

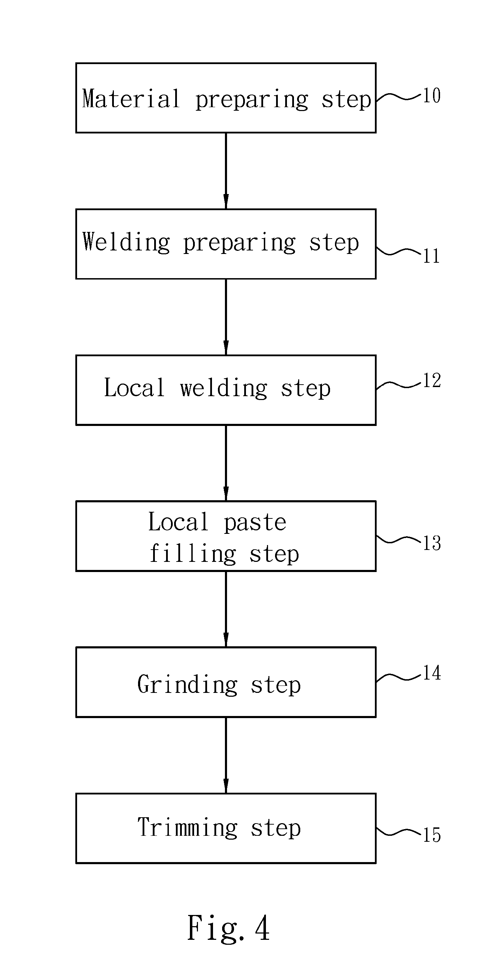

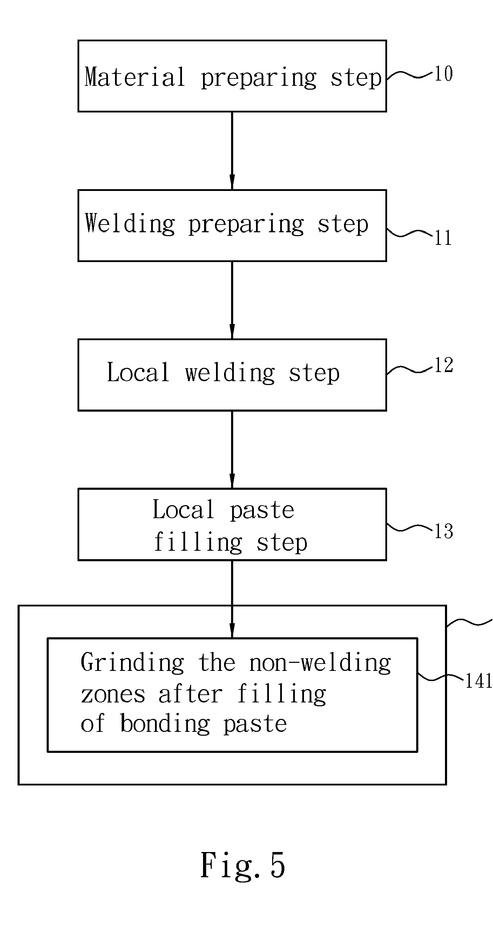

Please referring to FIG. 4, in another embodiment of the invention the method further includes a grinding step 14 of grinding the welding zones 221 after the local paste filling step 13 to smooth the surface of the intended welding seam 22 to match the surface of the first metal piece 20 or the second metal piece 21, thereby makes the metal component 24 more appealing in appearance. Furthermore, also referring to FIG. 4, at the local paste filling step 13 the bonding paste 23 could be filled unevenly, hence in yet another embodiment the grinding step 14 further includes a grinding sub-step 141 for the non-welding zones 222 after filling the paste to make the surface of the intended welding seam 22 evenly formed. Please also referring to FIG. 5, in yet another embodiment the grinding step 14 further is followed by a trimming step 15 by making coloration on the entire surface of the metal component 24 to change the surface characteristics thereof. More specifically, after the metal component 24 is finished, according to design or appearance requirements, selected paint can be coated on the metal component 24 by spraying or the like to change the surface characteristics.

In summary there is disclosed a method for welding metal components to weld a first metal piece 20 and a second metal piece 21 to form a metal component 24 comprising the steps of: positioning a first working portion 201 of the first metal piece 20 against a second working portion 211 of the second metal piece 21 to jointly form an intended welding seam 22; performing local welding on the intended welding seam 22 to form a plurality of welding zones 221 and a plurality of non-welding zones 222 that are spaced from each other; providing a bonding paste 23 to fill the non-welding zones 222 and providing a curing condition to cure the bonding paste 23 to mask the non-welding zones 222 to finish welding of the first metal piece 20 and the second metal piece 21 to form the metal component 24.

As a conclusion, the method for welding metal components provided by the invention can produce a metal component by welding a first metal piece and a second metal piece. During implementation of the method the first metal piece and the second metal piece are positioned with a first working portion and a second working position jointly defined an intended welding seam; next, perform local welding on the intended welding seam to form a plurality of welding zones and a plurality of non-welding zones that are spaced from each other; next, provide a bonding paste to fill the non-welding zones and provide a curing condition to cure the bonding paste to mask the non-welding zones to finish welding of the first metal piece and the second metal piece to form the metal component. As a result, in a given condition of the same structural strength the invention can resolve the problems of higher cost and extra grinding that occur to the conventional technique.

## Claims

1. A method for welding metal components, comprising the steps of:
material preparing step (10): providing a first metal piece (20) and a second metal piece (21), the first metal piece (20) including a first working portion (201) intended to join the second metal piece (21), and the second metal piece (21) including a second working portion (211) intended to join the first metal piece (20);
welding preparing step (11): positioning the second working portion (211) of the second metal piece (21) against the first working portion (201) of the first metal piece (20) to jointly define an intended welding seam (22);
local welding step (12): performing local welding on the intended welding seam (22) to form a plurality of welding zones (221) and a plurality of non-welding zones (222) that are spaced from each other; and
local paste filling step (13): filling a bonding paste (23) to each non-welding zone (222) and curing the bonding paste (23) in a curing condition to mask the non-welding zone (222) to finish welding of the first metal piece (20) and the second metal piece (21) to form a metal component (24).

2. The method of claim 1, wherein the curing condition at the local paste filling step (13) is a drying time after elapse thereof the bonding paste (23) on the welded first metal piece (20) and the second metal piece (21) is cured.

3. The method of claim 1, wherein the curing condition at the local paste filling step (13) is a curing temperature to cure the bonding paste (23) on the welded first metal piece (20) and the second metal piece (21).

4. The method of one of the preceding claims, wherein the bonding paste (23) at the local paste filling step (13) is an ultraviolet ray curing paste and the curing condition is providing an ultraviolet ray to project to the bonding paste (23) on the welded first metal piece (20) and the second metal piece (21) to cure the bonding paste (23).

5. The method of one of the preceding claims, wherein the local paste filling step (13) further is followed by a grinding step (14) of grinding the welding zones (221) on the intended welding seam (22) after welding is finished to smooth surface of the intended welding seam (22) to match surface of the first metal piece (20) or the second metal piece (21).

6. The method of claim 5, wherein the grinding step (14) further includes a grinding sub-step (141) of grinding the non-welding zones (222) after filling of the bonding paste (23).

7. The method of claim 4, wherein the local paste filling step (13) further is followed by a grinding step (14) of grinding the welding zones (221) on the intended welding seam (22) after welding is finished to smooth surface of the intended welding seam (22) to match surface of the first metal piece (20) or the second metal piece (21).

8. The method of claim 5, wherein the grinding step (14) is followed by a trimming step (15) of performing coloration on the entire surface of the metal component (24) to change the surface characteristics thereof.

9. The method of one of the preceding claims, wherein the local paste filling step (13) is followed by a trimming step (15) of performing coloration on the entire surface of the metal component (24) to change the surface characteristics thereof.

10. The method of claim 4, wherein total length of the welding zones (221) at the local welding step (12) is at least 30% of the total length of the intended welding seam (22).
